# EUROPEAN PATENT APPLICATION

(11) **EP 1 619 653 A2**
(43) Date of publication of application: **25.01.2006**
(21) Application number: 05015652.0
(22) Date of filing: 19.07.2005
(51) Int. Cl.: G09G 3/32

(54) **Multi-panel display device and method of driving the same**

(30) Priority: 20.07.2004 KR 2004056497; 20.07.2004 KR 2004056496
(71) Applicant: LG Electronics, Inc., Seoul (KR)
(72) Inventor: Hak, Su Kim, Mia 7-dong Gangbuk-gu Seoul (KR); Jae, Do Lee 1002, Dongwoo Green Park, Gyeongsangbuk-do (KR)
(74) Representative: von Hellfeld, Axel

(57) **Abstract**

The present invention relates to a multi-panel display device and method of driving the same that is adaptive of having a multi-panel and simplifying a driving circuit thereof.

A multi-panel display device according to the present invention includes: a plurality of display panels to which data lines are commonly connected; and a data driver which timely divides data to supply it to the data lines.

## Description

This application claims the benefit of Korean Patent Applications No. P2004-56496 and P2004-56497 filed in Korea on July 20, 2004, which is hereby incorporated by reference.

### BACKGROUND OF THE INVENTION

### FIELD OF THE INVENTION

The present invention relates to a multi-panel display device, and more particularly, to a multi-panel display device and method of driving the same that is adaptive of having a multi-panel and simplifying a driving circuit thereof.

### DESCRIPTION OF THE RELATED ART

Recently, there have been developed various flat panel display devices reduced in weight and bulk that is capable of eliminating disadvantages of a cathode ray tube (CRT). Such flat panel display devices include a liquid crystal display (LCD), a field emission display (FED), a plasma display panel (PDP) and an electroluminescence (EL) display, etc. device.

In such flat panel display devices, the PDP has the most advantage for making a large dimension screen because its structure and manufacturing process are simple, but has a drawback in that it has low light-emission efficiency and large power consumption. The LCD has a difficulty in making a large dimension screen because it is fabricated by a semiconductor process, but has an expanded demand as it is mainly used for a display device of a notebook personal computer. However, the LCD has a drawback in that it has a difficulty in making a large dimension screen and it has large power consumption due to a backlight unit. Also, the LCD has characteristics of a large light loss and a narrow viewing angle due to optical devices such as a polarizing filter, a prism sheet, a diffuser and the like. On the other hand, the EL display device is largely classified into an inorganic EL device and an organic EL device depending upon a material of a light-emitting layer. When compared with the above-mentioned display devices, the EL display device has advantages of a fast response speed, large light-emission efficiency, a large brightness and a large viewing angle. The organic EL display device can display a picture at approximately 10[V] and a high brightness of ten thousands of [cd/m²].

The organic EL display device comprises a display panel having an organic electro luminescence cell (OLED cell) in a matrix type.

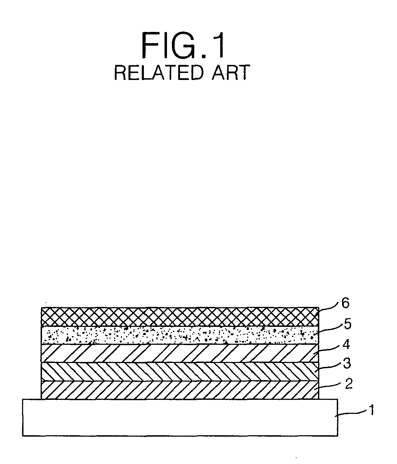

FIG. 1 is a schematic section view illustrating an organic EL cell.

In the organic EL cell, as shown in FIG. 1, there is formed an anode 2 formed of transparent conductive material on a glass substrate 1, and there are deposited a hole injection layer 3, a light-emitting layer 4 formed of organic material, an electron injection layer 5 and a cathode 6 formed of metal on top of it.

If an electric current is flowed between the anode 2 and the cathode 6, then holes in the hole injection layer 3 and electrons in the electron injection layer 5 respectively progress toward the light-emitting layer 4 to be combined in the light-emitting layer. Then, the light-emission layer 4 is excited and transferred by combing the hole and the electrons to generate a visible light.

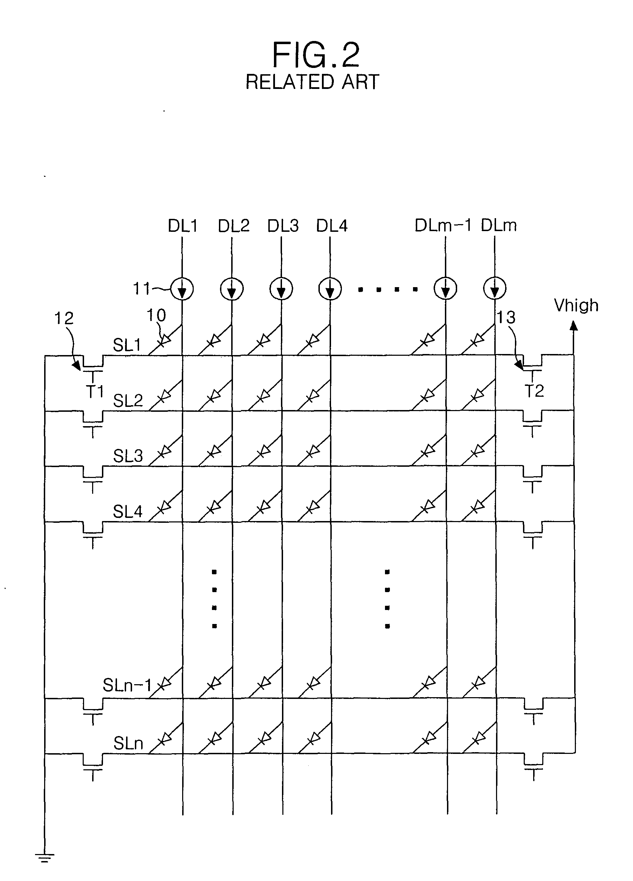

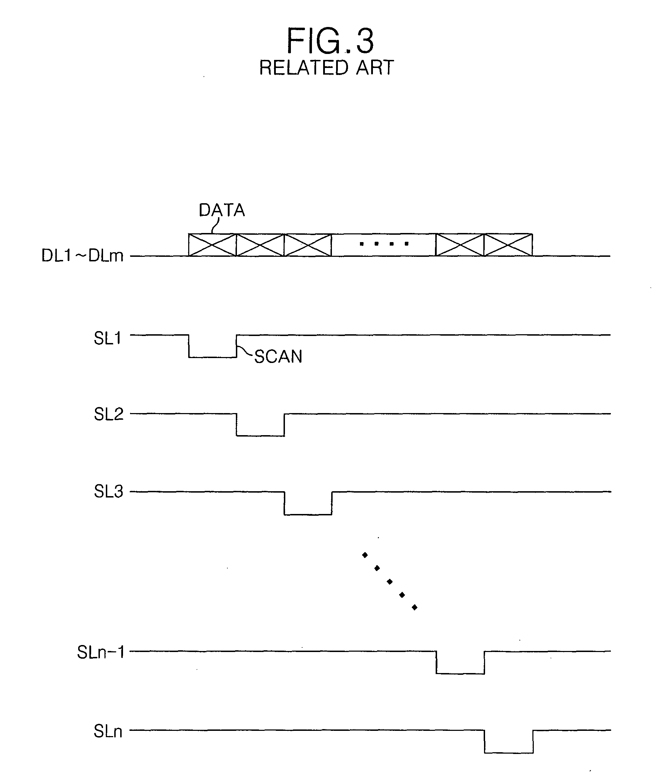

FIG. 2 is a circuit diagram of an organic EL display device, and FIG. 3 is a driving waveform diagram showing the organic EL display device in FIG. 2.

Referring to FIG. 2, the organic EL display device includes: data lines DL1 to DLm and scan lines SL1 to SLn, which are crossing each other; and an OLED cell 10 arranged in a matrix type for each cross.

The organic EL display device further includes: a constant current source 11 for supplying current to the data lines DL1 to DLm; and switching devices 12 and 13 for supplying a scan high voltage Vhigh and a ground voltage GND to each of scan lines SL1 to SLn.

The switching devices 12 and 13 connected to the scan lines SL1 to SLn, as shown in FIG. 3, sequentially apply a scan pulse SCAN to the first scan line SL1 to nth scan line SLn to select the scan line SLi (herein, i is any one number of 1 to n) where data are displayed. To this end, the switching devices 12 connected to the ground voltage source GND are turned on in response to a first control signal T1 to apply the scan pulse SCAN of the ground voltage GND to the selected scan lines SL1 to SLn. A data pulse DATA is synchronized with the scan pulse SCAN to be applied as a positive current to the data lines DL1 to DLm. In this case, the switching devices 13 connected to a scan high voltage source Vhigh is turned on in response to a second control signal T2 to apply a scan pulse of the scan high voltage Vhigh to a non-selected scan line. When a data current is supplied to the data lines DL1 to DLm, and at the same time, the ground voltage is supplied to the scan lines SL1 to SLn, the OLED cell 10 is emitted by flowing current by a forward direction bias.

Such an organic EL display device has been applied in a various fields along with LCD as a flat panel display device due to advantages such as its low power consumption and its high brightness.

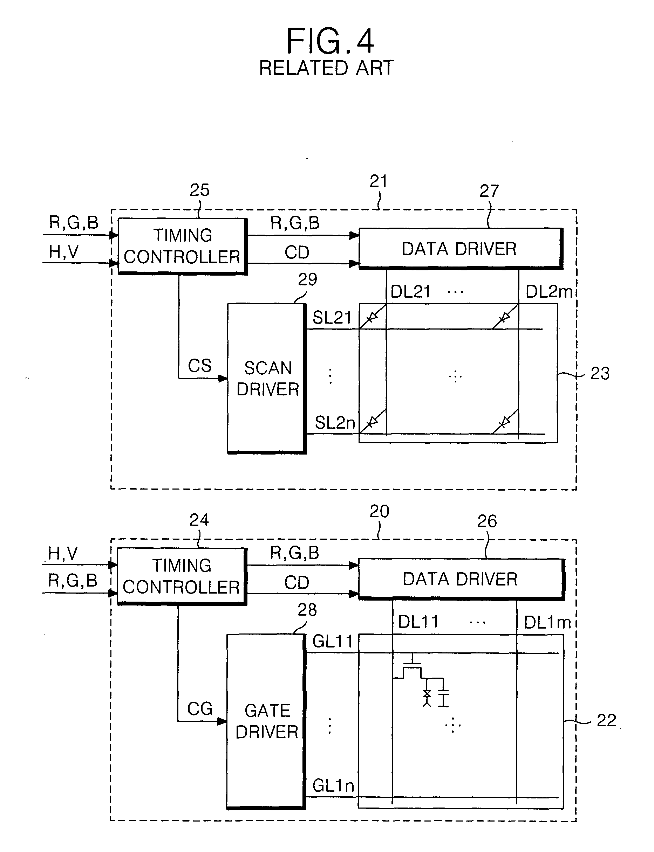

FIG. 4 is a block diagram showing a composition of a display device having a two-way panel as an example of a related art multi-panel display.

Referring to FIG. 4, the display device having the related art two-way panel includes a LCD module 20 and an organic EL display module 21.

The LCD module 20 of the display device having the two-way panel includes: data lines DL11 to DL1m and gate lines GL11 to GL1n; a liquid crystal display panel 22 having a liquid crystal cell and a thin film transistor TFT for each pixel area defined by a cross of both the data lines DL11 to DL1m and the gate lines GL11 to GL1n; a data driver 26 for supplying a data pulse to the data lines DL11 to DL1m and a gate driver 28 for supplying a gate pulse to the gate lines GL11 to GL1n; and a timing controller 24 for controlling the data driver 26 and the gate driver 28.

The TFT supplies data on the data lines DL11 to DL1m to the liquid crystal cell in response to the gate pulse from the gate lines GL11 to GL1n.

The organic EL display module 21 of the display device having the two-way panel includes: data lines DL21 to DL2m and scan lines SL21 to SL2n; a liquid crystal display panel 23 having an OLED cell formed in a matrix type for each cross of both the data lines DL21 to DL2m and scan lines SL21 to SL2n; a data driver 27 for supplying a data pulse to the data lines DL21 to DL2m and a scan driver 29 for supplying a scan pulse to the scan lines SL21 to SL2n; and a timing controller 25 for controlling the data driver 27 and the scan driver 29.

The data pulse is supplied to the data lines DL21 to DL2m, in synchronized with the scan pulse from the scan lines SL12 to SL2n, and at the same time, a current is flowed, to thereby emit OLED cell.

As mentioned above, in a case that the LCD module 20 and the organic EL display module 21 as a display device having a two-way panel, an optimum condition of voltage, current, and a control signal is different from each other. Accordingly, it is required that driving circuits are respectively controlled differently from each other. Therefore, there is a disadvantage of a large cost for circuits and large power consumption.

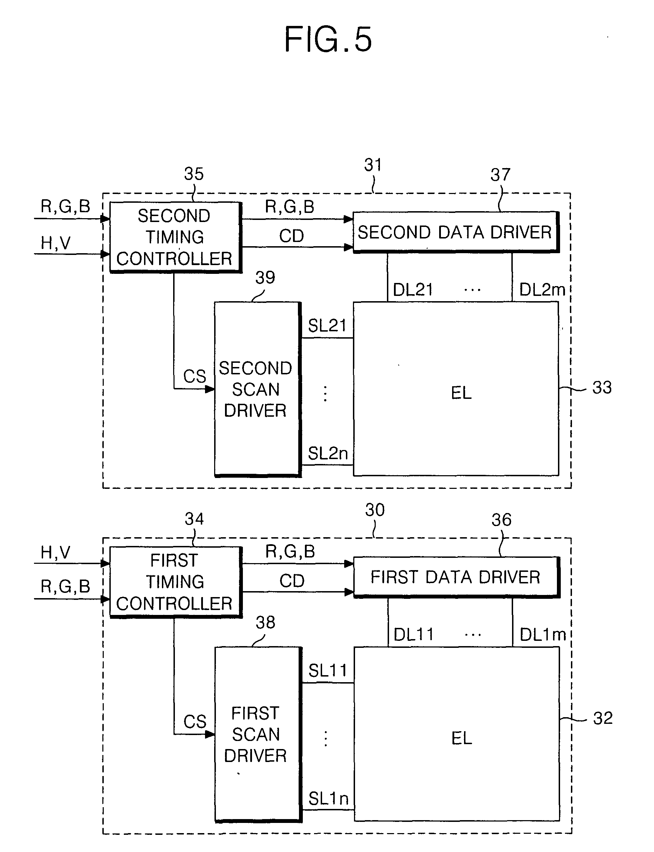

Another example of the related art display device having the multi-panel is showed in FIG. 5.

The display device having the two-way panel in FIG. 5 includes a first organic EL display module 30 and a second organic EL display module 31.

Referring to FIG. 5, the first and the second organic EL display modules 30 and 31 include: data lines DL11 to DL2m and scan lines SL 11 to SL2n, which respectively cross each other; and an OLED cell formed in a matrix type for each cross of both the data lines DL11 to DL2m and the scan lines SL 11 to SL2n.

The first organic EL display module 30 of the display device having the two-way panel includes: a first data driver 36 for supplying a data pulse to the data lines DL11 to DL1m of the first organic EL display panel 32; a first scan driver 38 for supplying a scan pulse to the scan lines SL11 to SL1n; and a first timing controller 34 for supplying a control signal to the first data driver 36 and the first scan driver 38.

The second organic EL display module 31 of the display device having the two-way panel includes: a second data driver 37 for supplying a data pulse to the data lines DL21 to DL2m of the second organic EL display panel 33; a second scan driver 39 for supplying a scan pulse to the scan lines SL21 to SL2n; and a second timing controller 35 for supplying a control signal to the second data driver 37 and the second scan driver 39.

However, in a case of using the first and the second organic EL display modules as a display device having the related art two-way panel as shown in FIG. 5, the first and the second organic display panels are respectively driven by the driving circuits different from each other, accordingly, it is possible to increase a cost for driving the first and the second organic display panels and to increase power consumption. In addition, there is a disadvantage in that a bulk of the display device having the two-way panel becomes large.

### SUMMARY OF THE INVENTION

Accordingly, it is an object of the present invention to provide a multi-panel display device and method of driving the same that is adaptive of having a multi-panel and simplifying a driving circuit thereof.

In order to achieve these and other objects of the invention, a multi-panel display device according to an embodiment of the present invention includes: a plurality of display panels to which data lines are commonly connected; and a data driver which timely divides data to supply it to the data lines.

A multi-panel display device according to an embodiment of the present invention includes: a N number of display panels, wherein N is a positive integer; a N/n number of display panel groups to which data lines of the N number of display panels, wherein n is a positive integer smaller than N, are commonly connected; and a data driver which timely divides data in each of the N/n number of display panel groups to supply it to the data lines.

The display panel includes an organic electro luminescence display panel.

The plurality of display panels includes scan lines respectively crossing the data lines.

The multi-panel display device further includes a scan driver which independently drives the scan lines in response to each of the plurality of display panels.

The scan driver includes: an odd scan driver which is located at one side of the display panel and drives a predetermined scan line of the scan lines; and an even scan driver which is located at another side of the display panel and drives the rest scan lines.

A multi-panel display device according to an embodiment of the present invention includes: a plurality of display panels, in which a plurality of data lines respectively cross a plurality of scan lines and the scan lines are commonly connected to the plurality of display panels; and a scan driver which supplies a scan pulse to the scan lines.

A multi-panel display device according to an embodiment of the present invention includes: a N number of display panels, wherein N is a positive integer; a N/n number of display panel groups to which scan lines of the N number of display panels, wherein n is a positive integer smaller than N, are commonly connected; and a scan driver which supplies a scan pulse in each of the N/n number of display panel groups to the scan lines.

The display panel includes an organic electro luminescence display panel.

The plurality of display panels includes data lines respectively crossing the scan lines.

The multi-panel display device further includes a data driver which independently drives the data lines in response to each of the plurality of display panels.

A method of driving a multi-panel display device according to an embodiment of the present invention includes: commonly connecting data lines to a plurality of display panels; and timely dividing data to supply it the data lines.

A method of driving a multi-panel display device according to an embodiment of the present invention includes: commonly connecting data lines of a N number of display panels, wherein N is a positive integer, by a n number of display panels unit, wherein n is a positive integer smaller than N, to providing a N/n number of display panel groups; and timely dividing data in each of the N/n number of display panel groups to supply it to the data lines.

The method according further includes scanning any one of display panels in response to the timely divided data.

A method of driving a multi-panel display device according to an embodiment of the present invention includes: commonly connecting scan lines to a plurality of display panels; and supplying a scan pulse to the scan lines.

A method of driving a multi-panel display device according to an embodiment of the present invention includes: commonly connecting scan lines of a N number of display panels, wherein N is a positive integer, by a n number of display panels unit, wherein n is a positive integer smaller than N, to providing a N/n number of display panel groups; and supplying a scan pulse in each of the N/n number of display panel groups to the scan lines.

The method further includes supplying data to the plurality of display panels in response to the scan pulse.

### BRIEF DESCRIPTION OF THE DRAWINGS

These and other objects of the invention will be apparent from the following detailed description of the embodiments of the present invention with reference to the accompanying drawings, in which:

FIG. 1 is a schematic section view illustrating an organic EL cell;

FIG. 2 is a circuit diagram of an organic EL display device;

FIG. 3 is a driving waveform diagram of the organic EL display device shown in FIG. 2;

FIG. 4 is a block diagram showing a composition of a related art multi-panel display device;

FIG. 5 is block diagram showing another multi-panel display device of the related art;

FIG. 6 is a block diagram showing a composition of a multi-panel organic EL display device according to a first embodiment of the present invention;

FIG. 7 is a driving waveform diagram of the multi-panel organic EL display device shown in FIG. 6;

FIG. 8 is a block diagram showing a composition of a multi-panel organic EL display device according to a second embodiment of the present invention;

FIG. 9 is a block diagram showing a composition of a multi-panel organic EL display device according to a third embodiment of the present invention;

FIG. 10 is a block diagram showing an example in which the multi-panel organic EL display device of FIG. 9 is applied to a folder mobile phone;

FIG. 11 is a block diagram showing a block diagram showing a composition of a multi-panel organic EL display device according to a fourth embodiment of the present invention;

FIG. 12 is a driving waveform of the multi-panel organic EL display device shown in FIG. 11; and

FIG. 13 is a block diagram showing a composition of a multi-panel organic EL display device according to a fifth embodiment of the present invention.

### DETAILED DESCRIPTION OF THE PREFERRED EMBODIMENT

Reference will now be made in detail to the preferred embodiments of the present invention, examples of which are illustrated in the accompanying drawings.

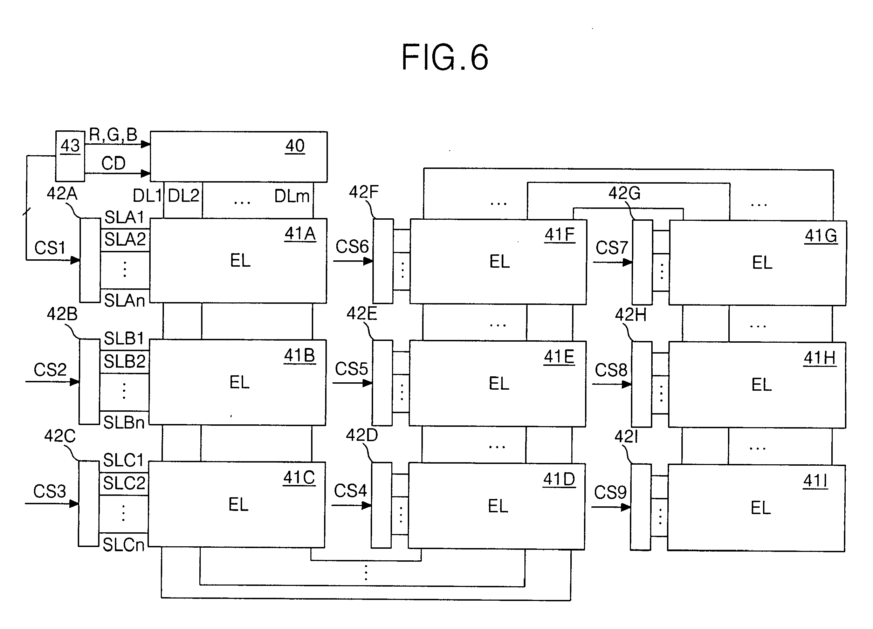

Hereinafter, the preferred embodiments of the present invention will be described in detail with reference to FIGs. 6 to 13.

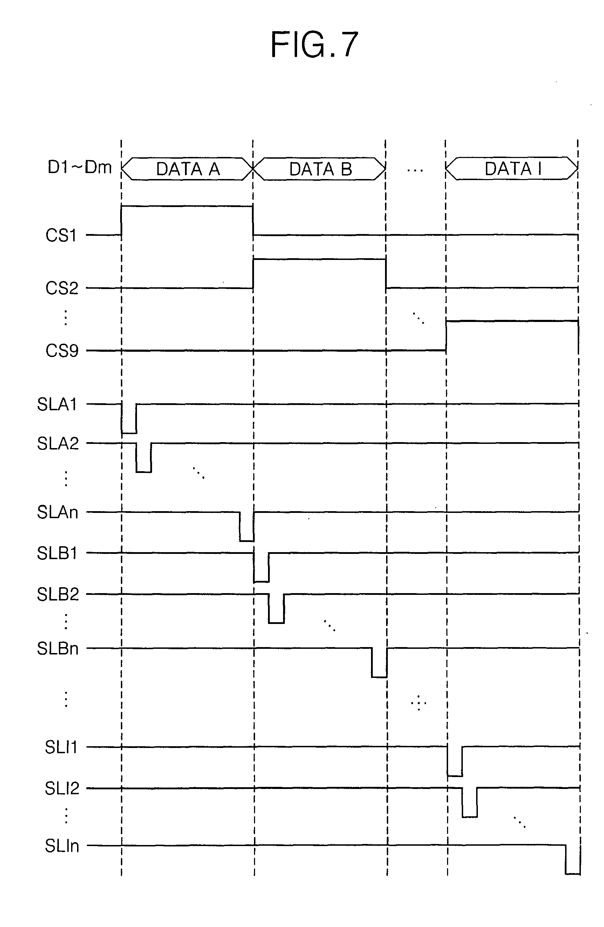

FIG. 6 is a block diagram showing a composition of a multi-panel organic EL display device according to a first embodiment of the present invention, and FIG. 7 is a driving waveform diagram of the multi-panel organic EL display device shown in FIG. 6.

Referring to FIG. 6, the multi-panel organic EL display device according to the first embodiment of the present invention includes a plurality of display panels 41A to 41I, which commonly have data lines DL1 to DLm.

The multi-panel organic EL display device includes a data driver 40, which commonly supplies a data pulse to the data lines DL1 to DLm commonly included in the display panels 41A to 41I.

The multi-panel organic EL display device further includes: scan driver 42A to 42I for independently supplying a scan pulse in correspondence to the display panels 41A to 41I respectively having scan lines SLA1 to SLIn; and a timing controller 43 for controlling the data driver 40 and the scan driver 42A to 42I.

Referring to FIG. 7, the data driver 40 of the multi-panel organic EL display device timely divides data into the display panels 41A to 41I to supply a data pulse to the data lines DL1 to DLm of the display panels 41A to 41I.

The timing controller 43 of the multi-panel organic EL display device supplies a control signal CS1 to the first scan driver 42A, which supplies a scan pulse to the entire scan lines SLA1 to SLAn of the first organic EL display panel 41A. When the control signal CS1 is applied to the first scan driver 42A, the first scan driver 42A sequentially supplies the scan pulse from the first scan line SLA1 to nth scan line SLAn of the first organic EL display panel 41A to select a scan line SLAi( herein, i is any one number of 1 to n) on which data is displayed. During the time when the scan pulse is supplied to the entire scan lines SLA1 to SLAn of the first organic EL display panel 41A, the data driver 40 supplies a data pulse to the data lines DL1 to DLm included in the first organic EL display panel 41A.

Thereafter, the timing controller 43 of the multi-panel organic EL display device sequentially supplies a control signal CS2 to CS9 to each of second to ninth scan drivers 42B to 42I, which supply a scan pulse to each of scan lines SLB1 to SLIn of second to ninth organic EL display panels 41B to 41I. When the signal CS2 to CS9 for controlling the second to ninth scan drivers 42B to 42I are sequentially supplied to the second to the ninth scan drivers 42B to 42I, the second to the ninth scan drivers 42B to 42I sequentially supply the scan pulse to the entire scan lines connected thereto to select a scan line on which data is displayed.

During the time when the scan pulse is supplied to the scan lines SLB1 to SLIn corresponding to each of the second to the ninth organic EL display panels 41B to 41I, the data driver 40 of the multi-panel organic EL display device supplies a data pulse to the data lines DL1 to DLm included in the second to the ninth organic EL display panels 41B to 41I.

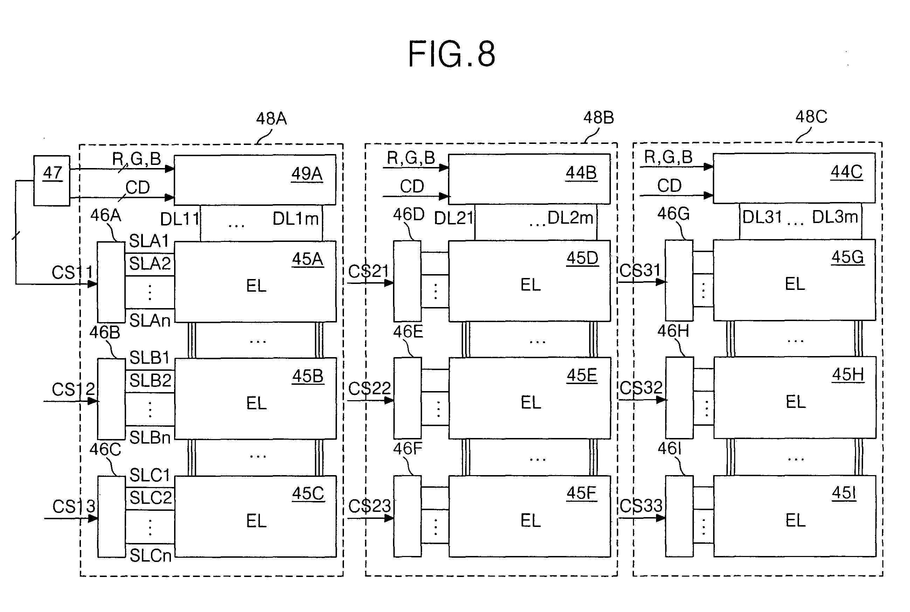

FIG. 8 is a block diagram showing a composition of a multi-panel organic EL display device according to a second embodiment of the present invention.

Referring to FIG. 8, a plurality of display panels 45A to 45I of the multi-panel organic EL display device include: a plurality of display panel group 48A to 48C, which commonly have data lines DL11 to DL3m for each column; and a plurality of data drivers 44A to 44C, which commonly supplies a data pulse to the data lines DL11 to DL3m included in each of the display panel groups 48A to 48C.

The multi-panel organic EL display device further includes: the display panels 45A to 45I having the scan lines SLA1 to SLIn; a plurality of scan drivers 46A to 46I for independently supplying a scan pulse in correspondence to each of the display panels 45A to 45I to each of scan lines SLA1 to SLIn; and a timing controller 47 for controlling the data drivers 44A to 44C and the scan drivers 46A to 46I.

The first data driver 44A of the multi-panel organic EL display device timely divides data into the display panels 45A to 45C of the first display panel group 48A to supply a data pulse to the data lines DL11 to DL1m commonly included in the first display panel group 48A.

In other words, the timing controller 47 of the multi-panel organic EL display device supplies a control signal CS11 to the first scan driver 46A, which supplies a scan pulse to the entire scan lines SLA1 to SLAn of the first organic EL display panel 45A. When the control signal CS11 is applied to the first scan driver 46A, the first scan driver 46A sequentially supplies the scan pulse from the first scan line SLA1 to nth scan line SLAn of the first organic EL display panel 45A to select a scan line SLAi(herein, i is any one number of 1 to n) on which data is displayed. During the time when the scan pulse is supplied to the entire scan lines SLA1 to SLAn of the first organic EL display panel 45A, the first data driver 44A supplies a data pulse to the data lines DL11 to DL1m of the first organic EL display panel 45A in the first display panel group 48A.

Thereafter, the timing controller 47 of the multi-panel organic EL display device sequentially supplies a control signal CS12 and CS13 to each of second and third scan drivers 46B and 46C, which supply a scan pulse to each of scan lines SLB1 to SLCn of second and third organic EL display panels 45B and 45C in the first display panel group 48A. When the signal CS12 and CS13 for controlling the second and the third scan drivers 46B and 46C are sequentially supplied to the second and the third scan drivers 46B and 46C, the second to the third scan drivers 46B and 46C sequentially supply the scan pulse to the entire scan lines SLB1 to SLCn connected thereto to select a scan line on which data is displayed.

During the time when the scan pulse is supplied to the scan lines SLB1 to SLCn corresponding to each of the second and the third organic EL display panels 45B and 45C in the first display panel group 48A, the first data driver 44A supplies a data pulse to the data lines DL11 to DL1m of each of the second and the third organic EL display panels 45B and 45C in the first display panel group 48A.

In the same method, the timing controller 47 of the multi-panel organic EL display device sequentially supplies a control signal CS21 and CS33 to each of fourth to ninth scan drivers 46D to 46I, which supply a scan pulse to each of scan lines SLD1 to SLIn of fourth to ninth organic EL display panels 45D to 45I of the second and the third display panel groups 48B and 48C. If the signal CS21 and CS33 for controlling the fourth to the ninth scan drivers 46D to 46I are sequentially supplied to the fourth to the ninth scan drivers 46D to 46I, then the second and the third data drivers 44B and 44C supply a data pulse to the data lines DL21 to DL3m corresponding to each of the second and the third organic EL display panel groups 48B and 48C during the time when the fourth to the ninth scan drivers 46D to 461 apply a scan pulse to the entire scan lines SLD1 to SLIn.

As described above, when each of the display groups commonly has the data line, it is possible to complement a problem of a low brightness cased by the increasing number of panels, which commonly have the data line.

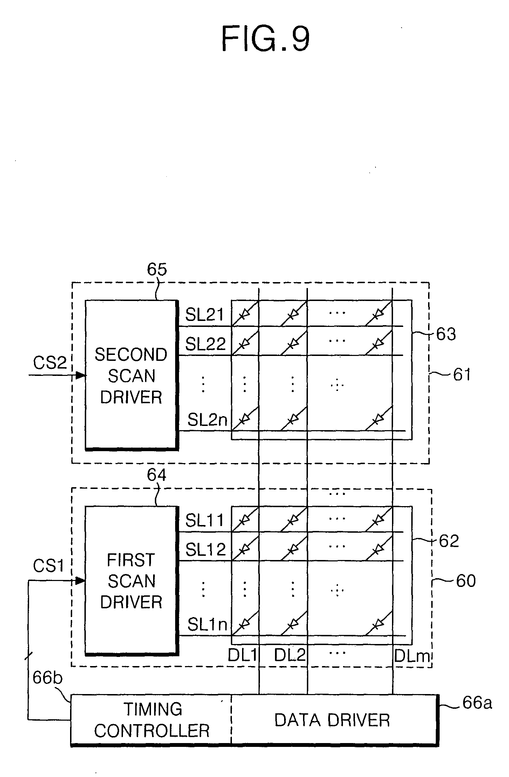

FIG. 9 is a block diagram showing a composition of an organic EL display device having a two-way panel according to a third embodiment of the present invention.

Referring to FIG. 9, the organic EL display device having the two-way panel includes a first organic EL display module 60 and a second organic EL display module 61.

A first organic EL display panel 62 of the first organic EL display module 60 includes first scan lines SL11 to SL1n crossing data lines DL1 to DLm.

Further, a second organic EL display panel 63 of the second organic EL display module 61 includes second scan lines SL21 to SL2n crossing the data lines DL1 to DLm extended from the first organic EL display panel 62.

The first organic EL display module 60 includes a first scan driver 64 for supplying a scan pulse to the first scan lines SL11 to SL1n, and the second organic EL display module 61 includes a second scan driver 65 for supplying a scan pulse to the second scan lines SL21 to SL2n.

The organic EL display device having the two-way panel includes: a data driver 66a for supplying a data pulse to the data lines DL1 to DLm of the first and the second display panels 62 and 63; and a timing controller 66b, integrated to the data driver 66a, for controlling the data driver 66a and the first and the second scan drivers 64 and 65.

The data driver 66a of the organic EL display device having the two-way panel supplies data to the data lines DL1 to DLm commonly included in the EL display panel 62 and the second organic EL display panel 63, in a time-division method.

The timing controller 66b of the organic EL display device having the two-way panel supplies a control signal CS1 to the first scan driver 64, which supplies a scan pulse to the entire scan lines SL11 to SL1n of the first organic EL display panel 62, and the data driver 66a supplies a data pulse to the data lines DL1 to DLm commonly included in the first organic EL display panel 62 during the time when a scan pulse is supplied to the entire scan lines SL11 to SL1n of the first organic display panel 62.

Further, The timing controller 66b of the organic EL display device having the two-way panel supplies a control signal CS2 to the second scan driver 65, which supplies a scan pulse to the entire scan lines SL21 to SL2n of the second organic EL display panel 63, and the data driver 66a supplies a data pulse to the data lines DL1 to DLm commonly included in the second organic EL display panel 63 during the time when a scan pulse is supplied to the entire scan lines SL21 to SL2n of the second organic display panel 63.

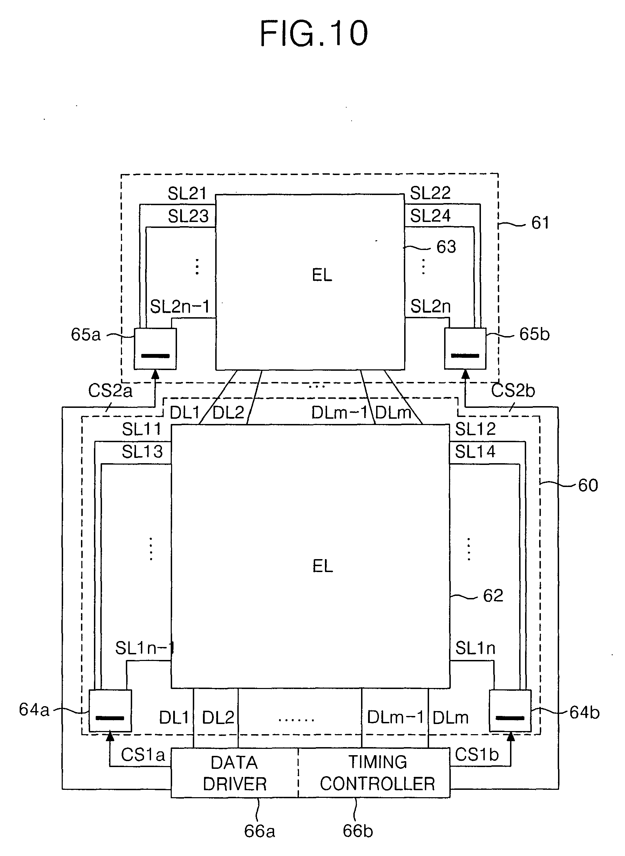

FIG. 10 is a block diagram showing an example in which the organic EL display device having the two-way panel of FIG. 9 is applied to a folder mobile phone.

Referring to FIG. 10, in the folder mobile phone according to the present invention, the data lines DL1 to DLm of the first organic EL display panel 62 are connected to the second organic EL display panel 63 through a cable or a flexible printed circuit FPC, which are not shown. Hereinafter, the first organic EL display panel 62 is assumed as a display device settled to a cover of a folder mobile phone and the second organic EL display panel 63 is assumed as a display device settled in a substance in which a cover of the folder mobile phone is combined to be capable of turning via a hinge.

Each of the first scan driver 64 and the second driver 65 of the first and the second organic EL display module 60 and 61 shown in FIG. 10 is implemented with mounted chips to be separated at both sides of the display panels 62 and 63 in each of the first and the second display panels 62 and 63. In other words, each of the first scan driver 64 and the second scan driver 65 is divided into first and second odd scan drivers 64a and 65a and first and second even scan drivers 64b and 65b.

When the first odd scan driver 64a arranged at a left side of the first organic EL display panel 62 is supplied with a first left side control signal CS1a from the timing controller 66b, it supplies a scan pulse to an odd-numbered line among the scan lines SL11 to SL1n of the first organic EL display panel 62. When the first even scan driver 64b arranged at a right side of the first organic EL display panel 62 is supplied with a first right side control signal CS1b from the timing controller 66b, it supplies a scan pulse to an even-numbered line among the scan lines SL11 to SL1n of the first organic EL display panel 62.

Further, when the second odd scan driver 65a arranged at a left side of the second organic EL display panel 63 is supplied with a second left side control signal CS2a from the timing controller 66b, it supplies a scan pulse to an odd-numbered line among the scan lines SL21 to SL2n of the second organic EL display panel 63. When the first even scan driver 65b arranged at a right side of the second organic EL display panel 63 is supplied with a second right side control signal CS2b from the timing controller 66b, it supplies a scan pulse to an even-numbered line among the scan lines SL21 to SL2n of the second organic EL display panel 63.

When the first and the second odd scan drivers 54a and 55a, and the first and the second even scan drivers 54b and 55b are located at the left and the right sides to supply a scan pulse to the scan lines SL11 to SL2n, a length of a wire line can be shorted. Accordingly, it is possible to solve a problem that a waveform is distorted by a voltage drop of the scan lines SL11 to SL2n or a picture quality is deteriorated.

As described above, in a case of implementing the multi-panel organic EL display device commonly having the data line, it is possible to reduce the number of components as compared to a case using each of the data driver and the timing controller. Accordingly, it is possible to lowered power consumption and to reduce bulk of the display device having the multi-panel.

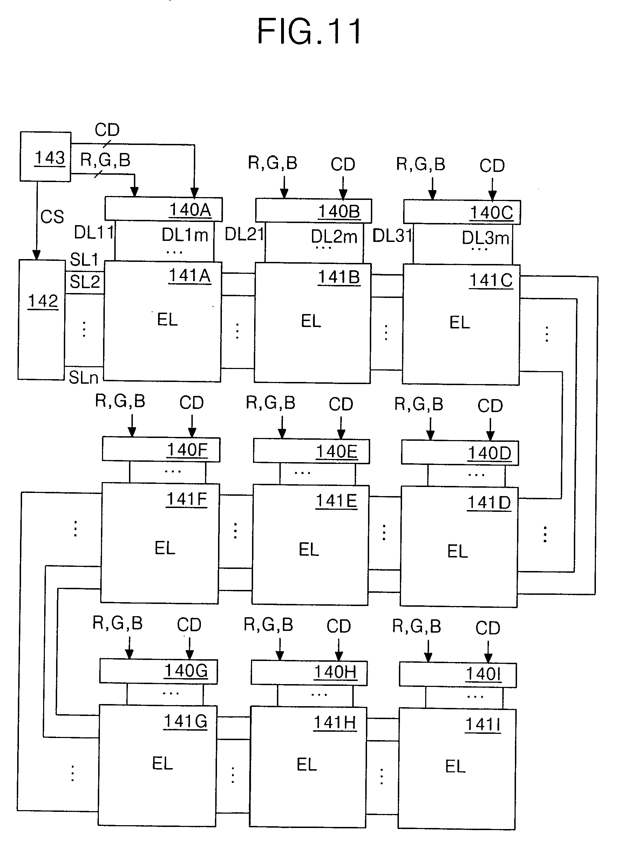

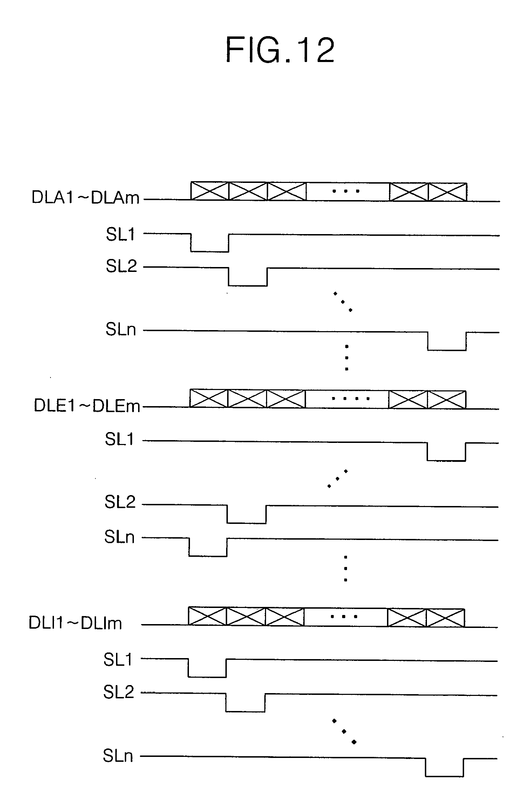

FIG. 11 is a block diagram showing a block diagram showing a composition of a multi-panel organic EL display device according to a fourth embodiment of the present invention, and FIG. 12 is a driving waveform of the multi-panel organic EL display device in FIG. 11.

Referring to FIG. 11, the multi-panel organic EL display device according to the fourth embodiment of the present invention includes a plurality of display panels 141A to 141I commonly having scan lines SL1 to SLn.

The multi-panel organic EL display device includes a scan driver 142 for commonly supplying a scan pulse to the scan lines SL1 to SLn commonly included in the display panels 141A to 141I.

The multi-panel organic EL display device further includes: data driver 140A to 140I for independently supplying data in correspondence to the display panels 141A to 141I having data lines DLA1 to DLIn; and a timing controller 143 for controlling the scan driver 142 and the data driver 140A to 140I.

Referring to FIG. 12, the scan driver 142 of the multi-panel organic EL display device supplies a scan pulse to the scan lines SL1 to SLn commonly included in the display panels 141A to 141I.

When a control signal CS is applied to the scan driver 142 from the timing controller 143 of the multi-panel organic EL display device, the scan driver 142 supplies a scan pulse to the entire scan lines SL1 to SLn of the display panels 141A to 141I.

When the control signal CS is applied to the scan driver 142, as shown in FIG. 12, the scan driver 142 sequentially supplies the scan pulse from the first scan line SL1 to nth scan line SLn in a case of a first row display panel 141A to 141C among the plurality of display panels 141A to 141I to select a scan line SLi(herein, i is any one number of 1 to n) on which data is displayed. On the other hand, the scan driver 142 sequentially supplies the scan pulse from the nth scan line SLn to the first scan line SL1 in a case of a second row display panel 141D to 141F among the plurality of display panels 141A to 141I to select a scan line on which data is displayed.

During the time when the scan pulse is supplied to the entire scan lines SL1 to SLn of the plurality of display panels 141A to 141I, the timing controller 143 supplies a control signal CD to the plurality of data drivers 140A to 140I. And, the plurality of data drivers 140A to 140I supply a data pulse to the data lines DLA1 to DLIm of the plurality of display panels 141A to 141I corresponding thereto.

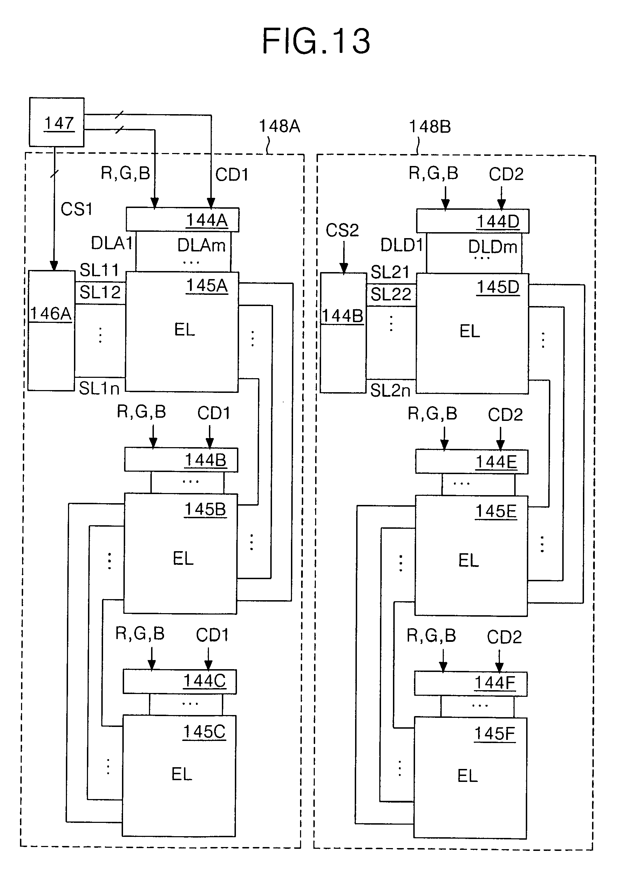

FIG. 13 is a block diagram showing a composition of a multi-panel organic EL display device according to a fifth embodiment of the present invention.

Referring to FIG. 13, a plurality of display panels 145A to 145F of the multi-panel organic EL display device include: a plurality of display panel groups 148A and 148B, which have scan lines SL11 to SL2n commonly for each column; scan drivers 146A and 146B of the display panel groups 148A and 148B, which commonly supplies a scan pulse to the scan lines SL11 to SL2n commonly included in each of the display panel groups 148A and 148B.

The multi-panel organic EL display device further includes: the plurality of display panels 145A to 145F having data lines DLA1 to DLFn; data drivers 144A to 144F for independently supplying a data pulse in correspondence to each of the display panels 145A to 145F to each of data lines DLA1 to DLFn; and a timing controller 147 for controlling the scan drivers 146A and 146B and the plurality of data drivers 144A to 144F.

The first scan driver 146A of the multi-panel organic EL display device supplies a scan pulse to the plurality of display panels 145A to 145C of the first display panel group 148A.

When a control signal CS1 is applied to the first scan driver 146A from the timing controller 147 of the multi-panel organic EL display device, the first scan driver 146A supplies the scan pulse to the scan lines SL11 to SL1n commonly included in the plurality of display panels 145A to 145C of the first display panel group 148A.

When the control signal CS1 is applied to the first scan driver 146A, the first scan driver 146A sequentially supplies the scan pulse from the first scan line SL11 to nth scan line SL1n in the first organic EL display panel 145A to select a scan line SL1i(herein, i is any one number of 1 to n) on which data is displayed. On the other hand, when the control signal CS1 is applied to the first scan driver 146A, the first scan driver 146A sequentially supplies the scan pulse from the nth scan line SL1n to the first scan line SL11 in the second organic EL display panel 145B to select a scan line on which data is displayed.

During the time when the scan pulse is supplied to the entire scan lines SL11 to SL1n of the first organic EL display panel group 148A, the timing controller 147 supplies a control signal CD1 to the plurality of data drivers 144A to 144C of the first display panel group 148A. When the control signal CD1 is supplied to the plurality of data drivers 144A to 144C of the first display panel group 148A, the plurality of data drivers 144A to 144C supply a data pulse to the entire data lines DLA1 to DLCm of the display panels 145A to 145C of the first display panel group 148A corresponding thereto.

In the same method, when a control signal CS2 is applied to the second scan driver 146B from the timing controller 147 of the multi-panel organic EL display device, the second scan driver 146B supplies the scan pulse to the scan lines SL21 to SL2n commonly included in the plurality of display panels 145D to 145F of the second display panel group 148B.

When the control signal CS2 is applied to the second scan driver 146B, the second scan driver 146B sequentially supplies the scan pulse from the first scan line SL21 to nth scan line SL2n in the fourth organic EL display panel 145D to select a scan line SL2i(herein, i is any one number of 1 to n) on which data is displayed. On the other hand, when the control signal CS2 is applied to the second scan driver 146B, the second scan driver 146B sequentially supplies the scan pulse from the nth scan line SL2n to the first scan line SL21 in the fifth organic EL display panel 145E to select a scan line on which data is displayed.

Accordingly, it is possible to complement a problem that the scan pulse waveform is distorted by a voltage drop caused due to the increasing number of panels, which commonly have the scan line in a case that each of display panel groups commonly has each scan line.

Further, in a case of implementing the multi-panel organic EL display device commonly having the scan line, it is possible to reduce the number of components as compared to a case using each of the scan driver and the timing controller. Accordingly, it is possible to lowered power consumption and to reduce bulk of the display device having the multi-panel.

As described above, the multi-panel display device and the method of driving the same according to the present invention commonly have the data line to simplify a driving circuit. Accordingly, it is possible to lowered power consumption, as well as, to enable a miniaturization of the entire components.

In addition, the multi-panel display device and the method of driving the same according to the present invention commonly have the scan line to simplify a driving circuit. Accordingly, it is possible to lowered power consumption, as well as, to enable a miniaturization of the entire components.

Although the present invention has been explained by the embodiments shown in the drawings described above, it should be understood to the ordinary skilled person in the art that the invention is not limited to the embodiments, but rather that various changes or modifications thereof are possible without departing from the spirit of the invention. Accordingly, the scope of the invention shall be determined only by the appended claims and their equivalents.

## Claims

1. A multi-panel display device comprising:
a plurality of display panels to which data lines are commonly connected; and
a data driver which timely divides data to supply it to the data lines.

2. A multi-panel display device comprising:
a N number of display panels, wherein N is a positive integer;
a N/n number of display panel groups to which data lines of the N number of display panels, wherein n is a positive integer smaller than N, are commonly connected; and
a data driver which timely divides data in each of the N/n number of display panel groups to supply it to the data lines.

3. The multi-panel display device according to claim 1 or claim 2, wherein the display panel includes an organic electro luminescence display panel.

4. The multi-panel display device according to claim 1 or claim 2, wherein the plurality of display panels includes scan lines respectively crossing the data lines.

5. The multi-panel display device according to claim 4, further comprising a scan driver which independently drives the scan lines in response to each of the plurality of display panels.

6. The multi-panel display device according to claim 5, wherein the scan driver includes:
an odd scan driver which is located at one side of the display panel and drives a predetermined scan line of the scan lines; and
an even scan driver which is located at another side of the display panel and drives the rest scan lines.

7. A multi-panel display device comprising:
a plurality of display panels, in which a plurality of data lines respectively cross a plurality of scan lines and the scan lines are commonly connected to the plurality of display panels; and
a scan driver which supplies a scan pulse to the scan lines.

8. A multi-panel display device comprising:
a N number of display panels, wherein N is a positive integer;
a N/n number of display panel groups to which scan lines of the N number of display panels, wherein n is a positive integer smaller than N, are commonly connected; and
a scan driver which supplies a scan pulse in each of the N/n number of display panel groups to the scan lines.

9. The multi-panel display device according to claim 7 or claim 8, wherein the display panel includes an organic electro luminescence display panel.

10. The multi-panel display device according to claim 7 or claim 8, wherein the plurality of display panels includes data lines respectively crossing the scan lines.

11. The multi-panel display device according to claim 10, further comprising a data driver which independently drives the data lines in response to each of the plurality of display panels.

12. A method of driving a multi-panel display device comprising:
commonly connecting data lines to a plurality of display panels; and
timely dividing data to supply it the data lines.

13. A method of driving a multi-panel display device comprising:
commonly connecting data lines of a N number of display panels, wherein N is a positive integer, by a n number of display panels unit, wherein n is a positive integer smaller than N, to providing a N/n number of display panel groups; and
timely dividing data in each of the N/n number of display panel groups to supply it to the data lines.

14. The method according to claim 12 or claim 13, further comprising scanning any one of display panels in response to the timely divided data.

15. A method of driving a multi-panel display device comprising:
commonly connecting scan lines to a plurality of display panels; and
supplying a scan pulse to the scan lines.

16. A method of driving a multi-panel display device comprising:
commonly connecting scan lines of a N number of display panels, wherein N is a positive integer, by a n number of display panels unit, wherein n is a positive integer smaller than N, to providing a N/n number of display panel groups; and
supplying a scan pulse in each of the N/n number of display panel groups to the scan lines.

17. The method according to claim 15 or claim 16, further comprising supplying data to the plurality of display panels in response to the scan pulse.
